# EUROPEAN PATENT SPECIFICATION

(11) **EP 4 496 281 B1**
(45) Date of publication and mention of the grant of the patent: **02.09.2026**
(21) Application number: 24785963.0
(22) Date of filing: 29.04.2024
(51) Int. Cl.: H04L 43/0852, H04L 45/02

(54) **NETWORK DELAY IN-BAND TELEMETRY METHOD AND APPARATUS, ELECTRONIC DEVICE, AND STORAGE MEDIUM**
BANDINTERNES NETZWERKVERZÖGERUNGSTELEMETRIEVERFAHREN UND -VORRICHTUNG, ELEKTRONISCHE VORRICHTUNG UND SPEICHERMEDIUM
PROCÉDÉ ET APPAREIL DE TÉLÉMESURE INTRABANDE DE RETARD DE RÉSEAU, DISPOSITIF ÉLECTRONIQUE, ET SUPPORT DE STOCKAGE

(30) Priority: 06.05.2023 CN 202310500422
(43) Date of publication of application: 22.01.2025
(73) Proprietor: State Grid Smart Grid Research Institute Co., Ltd., Beijing 102209 (CN); China Electric Power Research Institute, Beijing 100192 (CN)
(72) Inventor: WU, Junmin, Nanjing Jiangsu 210003 (CN); LIU, Chuan, Nanjing Jiangsu 210003 (CN); TAO, Jing, Nanjing Jiangsu 210003 (CN); LIU, Shidong, Nanjing Jiangsu 210003 (CN); SU, Jian, Beijing 100192 (CN); WANG, Wanqiao, Beijing 100192 (CN)
(74) Representative: Mathys & Squire
(86) International application number: PCT/CN2024/090674
(87) International publication number: WO 2024/230564

(56) References cited:
- CN-A- 105 187 273
- CN-A- 105 187 273
- CN-A- 106 100 925
- CN-A- 106 100 925
- CN-A- 109 041 071
- CN-A- 109 041 071
- CN-A- 116 232 956
- US-A1- 2010 118 715
- LIAO LINGXIA ET AL: "An Efficient and Accurate Link Latency Monitoring Method for Low-Latency Software-Defined Networks", IEEE TRANSACTIONS ON INSTRUMENTATION AND MEASUREMENT, IEEE, USA, vol. 68, no. 2, 1 February 2019 (2019-02-01), pages 377 - 391, XP011694374, ISSN: 0018-9456, [retrieved on 20181221], DOI: 10.1109/TIM.2018.2849433

## Description

### CROSS-REFERENCE TO RELATED APPLICATIONS

The present application is based on and claims priority to the Chinese Patent Application NO. 202310500422.4, filed on May 6, 2023.

### TECHNICAL FIELD

Embodiments of the present invention relate to the field of network delay measurement, and in particular to a network delay in-band telemetry method and apparatus, an electronic device and a storage medium.

### BACKGROUND

With the rapid development of Internet, a number of Internet users around the world continues increasing. With the rapid increase of the users and the increasing demand from the users, data traffic of the Internet is growing rapidly. The enormous volume, complicated devices and diverse protocols have made the Internet bloated and huge. The control logic and data plane of the conventional Internet are tightly coupled under distributed architecture, which has brought huge challenges to network development and management personnel of the Internet, making network transmission and network configuration optimization more difficult. Network transmission management is closely related to the prompt sensing and accurate measurement of network status. With the increase in traffic and the complexity of the network structure configuration, due to the distributed architecture of conventional Internet networks and the tight coupling of conventional switch hardware and control logic, it becomes increasingly difficult to acquire network status using conventional network measurement methods. Therefore, it is of great significance to develop an efficient and accurate network telemetry technology.

In recent years, Software Defined Networking (SDN) and Programmable Data Plane (PDP) technology have developed rapidly and become new technical supports for the network telemetry technology. SDN architecture separates a control plane and a data plane that are tightly coupled to network devices in conventional networks, and elevates the control plane to a network controller. A switch device in the network only retains the data plane, and the control plane sends a flow table rule to a data plane switch by means of an Openflow protocol to complete the control of the data plane. The PDP technology provides data plane programmability for the users, and a programmable switch allows processing network data packets by means of programming during the data packet transmission. The SDN architecture overcomes the rigidification caused by the tight coupling of conventional network control and forwarding, and provides a global view and centralized management of the networks by means of centralized control, whereas the PDP technology frees up hardware devices of the data plane, provides a protocol-independent forwarding system, and releases powerful processing capabilities on the data plane. The combination of the SDN architecture and the PDP technology provides more flexibility for large-scale network status telemetry technology.

In-band Network Telemetry (INT) technology makes full use of the SDN technology and the PDP technology. In the forwarding process of the data packet, the data packet carries corresponding network device parameters at each hop of the forwarding path, the parameters carried by the data packet are extracted at a receiving terminal, and network status information on the forwarding path is calculated and submitted to a network controller. The network delay, which is one of the most important indicators in network status information, requires accurate INT measurement. How to deploy the INT to accomplish the accurate measurement of the global network delay is an urgent problem to be solved.

Document XP11694374 A entitled "An Efficient and Accurate Link Latency Monitoring Method for Low-Latency Software-Defined Networks" by Lingxia Liao proposes a novel latency monitoring method for software-defined networks (SDNs) called LLDP-looping, which uses LLDP packets injected repeatedly in the control plane to determine latency between switches. It provides accurate and continuous latency monitoring without involving any dedicated network infrastructure, while avoiding potential measurement failures that can occur in the existing method of timestamping data packets as probe packets, and overcoming the major factors that decrease the measurement accuracy in many existing methods for monitoring SDN latency. It formulates an optimization problem to enable LLDP-looping to minimize its workload on both control and data planes, and proposes a novel greedy algorithm to solve this problem efficiently.

Document CN105187273 A provides a probe deployment method and device for power communication private network service monitoring. The method comprises the steps of modeling a power communication private network into an undirected graph of which each vertex has a weight, obtaining a minimal vertex covering set in the graph, and determining the deployment capacity of probes through the minimal vertex covering set of the graph and giving the deployment priority of each probe based on a node weight.

### SUMMARY

The invention is set out in the appended set of claims.

### BRIEF DESCRIPTION OF THE DRAWINGS

FIG. 1 is a flowchart of a network delay in-band telemetry method according to an embodiment of the present invention.
FIG. 2 is a flowchart of a heuristic algorithm for finding a minimum vertex cover set according to an embodiment of the present invention.
FIG. 3 is an algorithm flowchart for constructing a set of detection paths according to an embodiment of the present invention.
FIG. 4 is a flowchart of a network-wide link delay measurement process according to an embodiment of the present invention.
FIG. 5 is a diagram of a relationship between a scale of a random topology graph and time required for network-wide link delay measurement according to an embodiment of the present invention.
FIG. 6 is a diagram of a relationship between a scale of a random topology graph and network-wide link delay measurement overhead according to an embodiment of the present invention.
] FIG. 7 is a structural diagram of a network delay in-band telemetry apparatus according to an embodiment of the present invention.
FIG. 8 is a structural diagram of an electronic device according to an embodiment not being part of the invention.

### DETAILED DESCRIPTION

In order to make the objectives, technical solutions and advantages of the embodiments of the present invention clearer, the technical solutions in the embodiments of the present invention would be clearly and completely described below with reference to the accompanying drawings in the embodiments of the present invention. Obviously, the described embodiments are some of the embodiments of the present invention, rather than all of the embodiments. All other embodiments obtained by those skilled in the art based on the embodiments of the present invention without creative efforts fall within the scope of protection of the present invention.

To facilitate understanding of the embodiments of the present invention, specific embodiments would be further illustrated and described below with reference to the accompanying drawings, which do not constitute a limitation on the embodiments of the present invention.

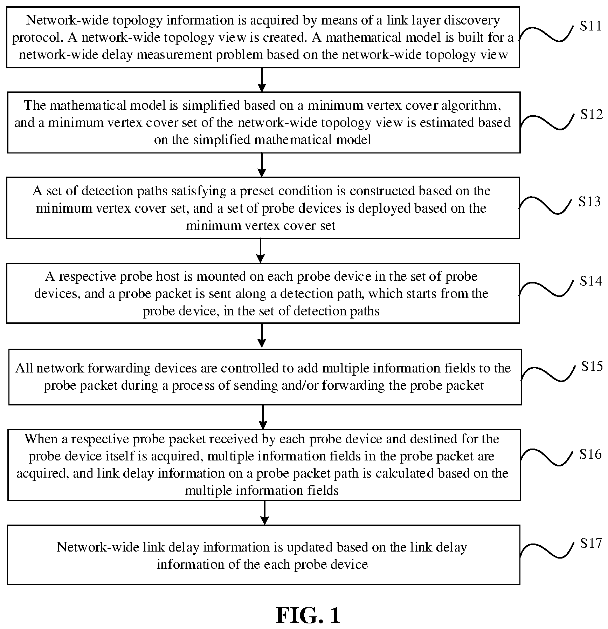

FIG. 1 is a flowchart of a network delay in-band telemetry method according to an embodiment of the present invention. As shown in FIG. 1, the method specifically includes the following operations.

At S11, network-wide topology information is acquired by means of a link layer discovery protocol. A network-wide topology view is created. A mathematical model is built for a network-wide delay measurement problem based on the network-wide topology view.

In the embodiment of the present invention, a network-wide link delay in-band telemetry simulation system is constructed based on an Open Network Operating System (ONOS) controller and a Mini Network Emulation (Mininet) simulation software platform, and a telemetry main program is deployed on a minimum vertex cover set by means of mounting a probe host.

Specifically, a network-wide topology is modeled as a simple undirected connected graph. Network switch devices and terminals are vertices in the graph, and network links are undirected edges in the graph. Devices in the network that perform the network delay detection using probe packets are defined as probe devices. In in-band telemetry, it is necessary to select a portion of the devices as the probe devices, which correspond to a portion of vertices in the network. Furthermore, when an edge in the network and its corresponding network link are mentioned, and when a device in the network and its corresponding node are mentioned, they would not be further distinguished from each other.

The network is modeled as a simple undirected graph *G*(*V, E*) , where *V* = {*v*₁, *v*₂, ..., *vₙ*} is a set of vertices in the graph, and *E* = {*e*₁, *e*₂, ..., *eₘ*} is a set of edges of the graph. In-band network telemetry is used to perform detection in the network. A forwarding path through which a probe packet passes is defined as a detection path. A detection path may be represented as a path *path* = {*v*₀, *e*₀, *v*₁, *e*₁, ..., *v*_{*k*-1}, *e*_{*k*-1}, *vₖ*} in a network graph model, herein two endpoints of *eᵢ* are *vᵢ* and *v*_{*i+*1}, respectively, and *i* ∈ {0, 1, 2, ..., *k* -1}. A number of edges of the detection path is defined as the length of the detection path. According to the definition of the detection path, both the starting vertices and the ending vertices of the detection path are probe devices. Some symbols and terms would be introduced below, and a network-wide delay in-band telemetry problem is modeled.

For an edge *eᵢ* in a network, if *eᵢ* ∈ *path,* it is said that the detection path *path* covers *eᵢ. eᵢ* being covered by *path* means that the detection of *path* would obtain the relevant parameters of *eᵢ.* To measure the delay of each link in the entire network, it is necessary to find a set of detection paths S *=* {*pathᵢ* |*i =1,2,...,l*} in the network so that each edge in the network is covered by a detection path in S. That is, ∀*eᵢ* ∈ *E,* ∃*pathⱼ* ∈ *S*, so that *pathⱼ* covers *eᵢ.*

Firstly, the timeliness of in-band telemetry is measured. Taking that the propagation delay of edge *e_{α}* is *τ_{α}*, and that the queuing and processing delay at node *v_{α}* is *κ_{α},* since probe traffic is tiny, the sending delay is ignored, and the time required to perform delay detection on the path *pathᵢ* = {*v*₀, *e*₀, ..., *v*_{*k*-1}, *e*_{*k*-1}, *vₖ*} once by using the in-band network telemetry is: ${T}_{i} = {\sum }_{α = 0}^{k} {κ}_{α} + {\sum }_{α = 0}^{k - 1} {τ}_{α}$
where *τ_{α}, κ_{α} >* 0 . Hence, there is a significant negative correlation between the real-time performance of the in-band telemetry and the length of the detection path.

For the selection of *S* = {*pathᵢ* | *i* = 1, 2, ..., *l*}*,* the detection on all detection paths is performed in parallel, and the time required for detecting the network-wide link delay once is: ${T}_{max} = max \left\{{T}_{i}\left|i=1,2,…,l\right.\right\}$
where *Tᵢ* represents the time consumed to perform the in-band telemetry on the path *pathⱼ* in *S* by using the in-band network telemetry. The selection of *S* must ensure that the length of the detection path is not too large, so that *T*ₘₐₓ is within a reasonable range to ensure the real-time performance and accuracy of the in-band telemetry.

Secondly, the overhead of the in-band telemetry is measured. The additional overhead required for the in-band telemetry is mainly divided into two parts: deployment overhead of the probe devices and additional overhead caused by repeated link measurements. Assuming that the average deployment overhead of the probe devices is c , *S =* {*pathᵢ* |*i* = 1, 2, ..., *l*} is selected, and *V*₀ is taken as a set of probe devices that need to be deployed, that is:
*V₀* = {*v* ∈ *V* |∃*path* ∈ *S, s. t. path* starting from or ending with v} (3)

Then, the total overhead of deploying the probe devices is proportional to the total number of the deployed probe devices: ${Cost}_{deploy} = c \times \left|{V}_{0}\right|$

Taking the average overhead of transmitting a single probe packet on an edge as *d,* and taking *m₀* as the sum of path lengths in *S*, that is: ${m}_{0} = {\sum }_{path ∈ S} length \left(path\right)$

Then, the link repetition rate is: $λ = \frac{{m}_{0} - \left|E\right|}{\left|E\right|}$

Then, the total overhead of the repeated link detection is: ${Cost}_{redundant} = λ \times d \times \left|E\right|$

In actual situations, since the probe traffic is tiny and *d* is usually relatively small, when the link repetition rate *λ* is not very large, the overhead caused by the repeated link measurements is often smaller than the deployment overhead of the probe devices.

In summary, the network-wide delay in-band telemetry problem can be described abstractly as: finding a set of detection paths *S =* {*pathᵢ* |*i* = 1,2, *..., l*}, so that for *∀eᵢ* ∈ *E*, ∃*pathⱼ* ∈ *S , pathⱼ* would cover *eᵢ*, and the following indicators are minimized:
1) ${T}_{max} = max \left\{{T}_{i}\left|i=1,2,…,l\right.\right\}$
2) ${Cost}_{deploy} = c \times \left|{V}_{0}\right|$
3) ${Cost}_{redundant} = λ \times d \times \left|E\right| .$

At S12, the mathematical model is simplified based on a minimum vertex cover algorithm, and a minimum vertex cover set of the network-wide topology view is estimated based on the simplified mathematical model.

In order to simplify the mathematical model of the network-wide delay in-band telemetry problem, a minimum vertex cover algorithm based on the association degree is used. Edges incident to vertices with high association degrees are preferentially selected for coverage, and a minimum vertex cover set *V"* of the network topology *G(V,E)* is estimated by means of multiple rounds of iterative addition.

Specifically, the above-mentioned network-wide delay in-band telemetry problem for modeling is a multi-objective combination optimization problem, in which three objectives mutually restrict each other. It is difficult to directly obtain an optimal solution to the above-mentioned combination optimization problem. Moreover, since the measurement of some indicators is affected by the subjective utility of the network managers in actual situations, obtaining the absolute optimal solution itself is not very meaningful. Therefore, in the embodiments of the present invention, the importance of the three objectives is comprehensively weighed up to make trade-offs among the objectives, and a satisfactory solution of the problem is obtained within a range in which each indicator can be tolerated.

Since the time consumed by the in-band telemetry is directly related to the accuracy and availability of the measurement results, the time *T*ₘₐₓ consumed by detecting the network-wide link delay once is the most important indicator, which needs to be ensured first. The key to ensure *T*ₘₐₓ is to ensure that the maximum length of the detection path is relatively small. Secondly, due to the tiny probe traffic in actual situations, when the repetition rate of link coverage is not very large, the overhead caused by the repeated link measurement is small. Therefore, it is necessary to optimize the deployment overhead of the probe devices, that is, optimizing the number of the deployed probe devices, while ensuring that the link repetition rate is within a reasonable range. In summary, in the embodiments of the present invention, the above-mentioned problem is transformed into solving a minimum point cover problem, and an optimal set of detection paths *S* is constructed.

For a vertex v and an edge *e* in an undirected graph *G*(*V , E*), if *e* is associated with *v*, it is said that the edge e is covered by the vertex v. For a vertex set *V'* ⊆ *V,* if for ∀*e* ∈ *E*, ∃*v*∈ *V*', the edge *e* is covered by the vertex *v*, it is said that *V'* is a point cover of the graph *G*(*V* , *E*). If *V"* ⊆ *V* is a point cover of the graph *G*(*V* , *E*), and for any one point cover *V"* ⊆ *V* of *G*(*V, E*)*,* there is |*V"*|≤|*V'*|, *V*" is a minimum point cover of the graph *G(V,E).* For general graphs, there is no efficient algorithm that can obtain an optimal solution to the minimum point cover problem. In fact, the minimum vertex cover problem is one of Karp's famous 21 NP-complete problems. Currently, the algorithms that can ensure the efficiency of solving the minimum subversion problem are all heuristic algorithms. Next, some terms and symbols are explained before a heuristic algorithm of the present invention is described.

For an undirected graph *G*(*V , E*), *E*(*G*) represents a set of edges of the graph *G*, that is, *E*(*G*) == *E. V*(*G*) represents a set of vertices of the graph *G*, that is, *V*(*G*) == *V .* Taking *V*' ⊆ *V* as a set of points in the graph *G*, *E_{G}*(*V*') represents a set of edges in the graph *G* associated with the vertices in *V'*. *G-V'* represents a graph obtained after removing vertices in *V'* and edges in *E_{G}*(*V'*) from the graph *G*, that is, *G - V'* == (*V - V', E - E_{G}*(*V*')). Assuming that *path =* {*v*₀*e*₀*v*₁...*v*_{*k*-1}*e*_{*k*-1}*vₖ*} is a path in the graph *G, G - path* represents a graph obtained by removing the edges in *path* from the graph *G*, that is, *G* - *path* == (*V, E - E*(*path*)).

For an edge *e* = (*v*₀, v₁) in the undirected graph *G(V,E),* if *v₀* ≠ *v*₁, it is said that vertex *v*₀ is adjacent to vertex *v*₁. For vertex *v* ∈ *V ,* a set of points adjacent to *v* in *V* is referred to as a domain of vertex *v* in the graph *G*, recorded as *N_{G}*(*v*), that is: ${N}_{G} \left(ν\right) = \left\{w∈V\left|w\neq ν and \left(ν, w\right)∈E\right.\right\}$

For vertex *v* ∈ *V* in the undirected graph *G*(*V, E*), the association degree of *v* is defined as the sum of the degrees of all points adjacent to *v*, plus the degree of *v* itself, and the association degree of *v* is recorded as *D*(*v*), then $D \left(ν\right) = {\sum }_{w ∈ \left\{ν\right\} ∪ {N}_{G} \left(ν\right)} deg \left(w\right)$

Further, the heuristic algorithm based on association degree in an embodiment of the present invention is described. In the minimum point cover algorithm based on association degree, in each iteration, edges incident to vertices with a high association degree are preferentially selected for coverage, and it is ensured that no neighboring points in the same iteration are added to the point cover set. At the end of each iteration, the covered edges are removed from the graph and the association degree is recalculated for the next iteration until all edges in the graph are covered, and a vertex cover set is outputted. Steps of the minimum point cover algorithm based on association degree are as follows:
1) Initializing the graph *G*' = *G*, *V"* = Ø, and a vertex access flag: initializing the graph *G'* = *G* , initializing the vertex cover set *V"* = Ø , and initializing the access flag *visited*(*w*) = *false,* ∀*w* ∈ *V*(*G'*) for each vertex.
2) If *E*(*G'*) == ∅, the algorithm ends, and the vertex cover set *V"* is outputted.
3) Otherwise, recalculating the association degree *D*(*w*), ∀*w* ∈ *V*(*G'*) of vertices in *G'*.
4) Deleting vertices with the association degrees of 0 from the graph *G'*, that is, *G'* = *G'* - {*w* ∈ *V*(*G'*)|*D*(*w*) == 0}*.*
5) Selecting an unaccessed vertex *v* with the greatest association degree in *G'*, and accessing *v*: *V"* = {*v*}∪*V".* Selecting *v* ∈ *V*(*G'*), *visited*(*v*) == *false, s.t.* $D \left(ν\right) = = max \left\{D\left(w\right)\left|w∈V\left(G′\right)and visited\left(w\right)==false\right.\right\} . Setting visited \left(ν\right) = true ,$ and taking *V"* = {*v*}*UV".*
6) Accessing the domain of *v* : For ∀*w* ∈ *N_{G'}*(*v*), setting *visited*(*w*) = *true .*
7) Delete the vertex *v* from *G'*: *G*' = *G*' - {*v*}.
8) Does an unaccessed vertex exist in *G'*?
   If $\left.\left\{w∈V\left(G′\right)\left|visited\left(w\right)==false\right.\right\}\neq ∅, go to 4\right) .$
9) Resetting access flags for all nodes in *G'* : *visited*(*w*) = *false,* ∀*w* ∈ *V*(*G'*). Go to 2).

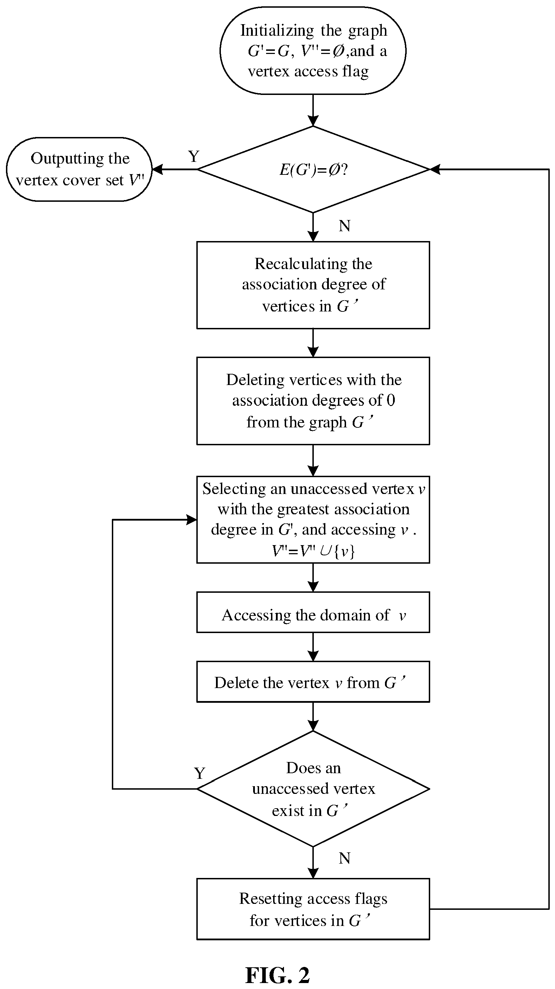

A flowchart of a heuristic algorithm for finding a minimum vertex cover set is shown in FIG. 2.

At S13, a set of detection paths satisfying a preset condition is constructed based on the minimum vertex cover set, and a set of probe devices is deployed based on the minimum vertex cover set.

According to the minimum vertex cover set *V"* of the network topology *G*(*V , E*), an optimal set of detection paths *S* is constructed. It has been found that *V"* is a minimum point cover set of the network *G*(*V, E*). An algorithm for constructing a detection path in *S* is as follows:
1) Initializing a graph *G'* = *G* , and initializing *S* = Ø.
2) If *E*(*G'*) *==* Ø, the algorithm ends.
3) Otherwise, arbitrarily taking an edge *e*₀=(*v*₀, *v*₁) in *E*(*G*'), where v₀ ∈ *V"*.
   Taking ∀*e*₀ ∈ *E*(*G'*), according to the definition of the minimum vertex cover set, a certain endpoint of *e₀* is *v*₀ ∈ *V"*, and the other endpoint of *e*₀ is recorded as *v*₁.
4) If *v*₁ ∈ *V",* taking *path* = *v*₀*e*₀*v*₁, and go to 7).
5) Otherwise, if *deg(v₁)* =1, taking *path* = *v*₀*e*₀*v*₁*e*₀*v*₀, and go to 7).
6) Otherwise, arbitrarily taking an edge *e*₁ =(v₁, v₂) connected to v₁, where v₁ ≠ v₂, and taking *path* = *v*₀*e*₀*v*₁*e*₁*v*₂.

Arbitrarily taking an edge *e*₁(*e*₁ ≠ *e*₀) connected to *v*₁, and according to the definition of the minimum vertex cover set, *e₁* is covered by a certain vertex *v*₂ in *V"*. Since *v*₁ ∉ *V"* , *v*₂ ≠ *v*₁. Taking *path* = *v*₀*e*₀*v*₁*e*₁*v*₂*.*
7) Taking *S* = *S*∪{*path*} and *G'* = *G'* - *path ,* and go to 2).

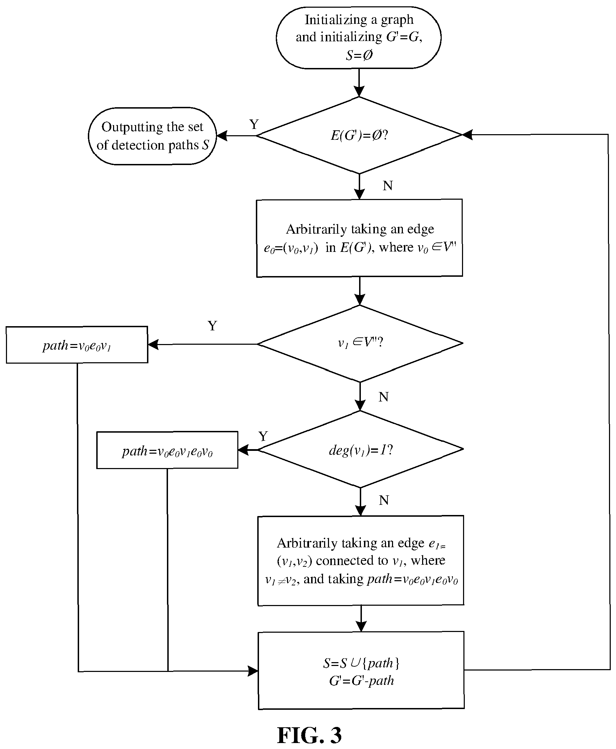

In summary, an algorithm flowchart for constructing a set *S* of detection paths according to the minimum vertex cover set is shown in FIG. 3.

Excellent properties of the optimal set *S* of the detection paths as constructed above would be described below. First of all, for any detection path *path* ∈ *S, length*(*path*) ≤ 2. Therefore, the maximum path length in *S* is ≤ 2 , the time *Tₘₐₓ* consumed by detecting the network-wide link delay once is small, and the measurement accuracy is high. Secondly, the link repetition rate of the detection path *path* is *λₚₐₜₕ* ≤ 1, and there is no link overlap for different detection paths, so that the global link repetition rate is *λ* ≤ 1. Since the probe traffic is tiny, *d* is usually small, the additional overhead *Cost_{redundant}* ≤ *d*× | *E* | of repeated link detection is small. Finally, since the set *V*₀ of probe devices that need to be deployed is exactly the minimum vertex cover set *V"*, on the premise of first ensuring that the objective *T*ₘₐₓ is optimized and maintaining a small link repetition rate, the minimum nature of the minimum vertex cover set ensures the optimization of the number of deployed probe devices, thus reducing the deployment overhead *Cost_{deplay}* of the probe devices.

At S14, a respective probe host is mounted on each probe device in the set of probe devices, and a probe packet is sent along a detection path, which starts from the probe device, in the set of detection paths.

The probe host is mounted on a network device in the probe device set. Each detection host is mounted to a respective probe device *v* ∈ *V* . The probe packet is sent along a detection path starting from *v* in *S* by means of source routing. For each detection path *path = v e*₀...*v*_{*k*-1}*e*_{*k*-1}*vₖ* in *S*, as defined by the detection path, *vₖ* is also a probe device, and a probe packet generated by the detection host mounted to *v* is forwarded along the path *v* → *v*₁ → ... → *v*_{*k*-1} → *vₖ* by means of the source routing. Each probe device *v* provides a default route to forward all probe packets destined for v to a detection terminal suspended from v.

At S15, all network forwarding devices are controlled to add multiple information fields to the probe packet during a process of sending and/or forwarding the probe packet.

In an embodiment of the present invention, during the process of sending and/or forwarding the probe packet, all network forwarding devices add information fields such as a packet arrival time, a receiving port, a packet sending time, a sending port, and a device number of the network forwarding devices themselves to the probe packet by means of a programmable switch.

At S16, when a respective probe packet received by each probe device and destined for the probe device itself is acquired, multiple information fields in the probe packet are acquired, and link delay information on a probe packet path is calculated based on the multiple information fields.

Any one probe device receives a probe packet destined for itself, extracts the information fields in the probe packet, and calculates a link delay of the probe packet path. Specifically, it is assumed that the arrival time of the probe packet marked at a certain hop *vᵢ* is *tᵢ,* the arrival time of the probe packet marked at a previous hop *v*_{*i*-1} is *t*_{*i-*1}, and the sending time is ${t}_{i - 1}^{′}$. The delay of the link *e* = (*v*_{*i*-1}, *vᵢ*) is *τ* = *tᵢ* - *t*_{*i*-1}, and the propagation delay is $τ ′ = {t}_{i} - {t}_{i - 1}^{′}$. After receiving and processing some probe packets, the probe host reports the collected link delay information to a controller.

At S 17, network-wide link delay information is updated based on the link delay information of the each probe device.

The controller acquires link delay reports regularly submitted by the probe devices, and updates and summarizes global network link delay information.

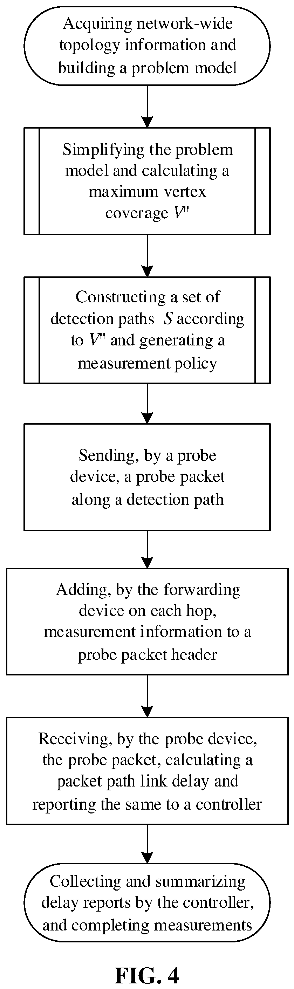

To summarize all of the above steps, the entire processing flow of network-wide link delay in-band telemetry is shown in FIG. 4. The entire processing flow of the network-wide link delay in-band telemetry includes: acquiring network-wide topology information and building a problem model; simplifying the problem model and calculating a maximum vertex coverage *V"*; constructing a set of detection paths *S* according to *V"* and generating a measurement policy; sending, by a probe device, a probe packet along a detection path; adding, by the forwarding device on each hop, measurement information to a probe packet header; receiving, by the probe device, the probe packet, calculating a packet path link delay and reporting the same to a controller; and collecting and summarizing delay reports by the controller, and completing measurements.

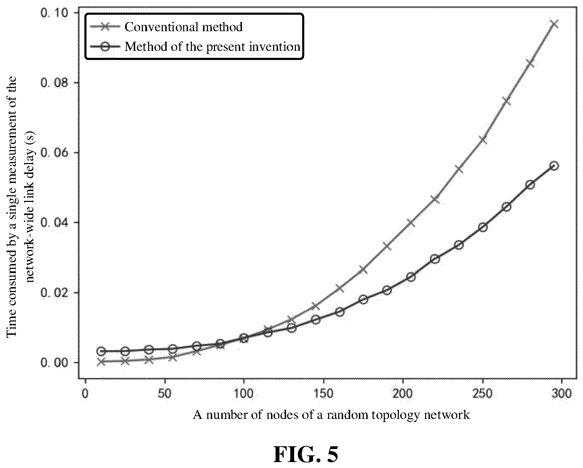

FIG. 5 is a diagram of a relationship between a scale of a random topology graph and time required for network-wide link delay measurement. As the total number of random topology vertices increases, the time consumed by the method in the embodiment of the present invention to perform a single measurement of the network-wide link delay gradually increases. When the network scale further increases, the method of the embodiments of the present invention for performing a single measurement of the network-wide link delay is superior in time to the conventional methods for performing the measurements link-by-link using round-trip delay. As the network topology scale further increases, the advantages of the method in the embodiment of the present invention become more obvious.

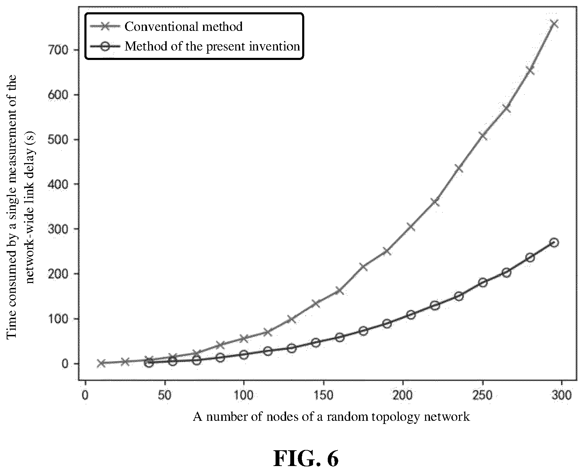

FIG. 6 is a diagram of a relationship between a scale of a random topology graph and a network-wide link delay measurement overhead. Since the link repetition coverage rate of the method in the embodiment of the present invention is *λ* ≤ 1, and the link repetition coverage rate of conventional methods is equal to 1, the traffic overhead of the method of the embodiments of the present invention is always better than that of the conventional methods. In addition, the method of the embodiments of the present invention interacts less with the control plane, so that additional overhead of frequent interaction between the data plane and the control plane is less.

By comparing the relationship between the measurement delay and the measurement overhead, according to the embodiments of the present invention, the network-wide link delay can be quickly and accurately measured, the single network-wide link delay measurement is performed more quickly than the conventional methods, and the required traffic overhead is less than that of the conventional methods.

A network delay in-band telemetry solution provided in embodiments of the present invention includes: acquiring network-wide topology information by means of a link layer discovery protocol, creating a network-wide topology view, and building, based on the network-wide topology view, a mathematical model for a network-wide delay measurement problem; simplifying the mathematical model based on a minimum vertex cover algorithm, and estimating a minimum vertex cover set of the network-wide topology view based on the simplified mathematical model; constructing, based on the minimum vertex cover set, a set of detection paths satisfying a preset condition, and deploying a set of probe devices based on the minimum vertex cover set; mounting a respective probe host on each probe device in the set of probe devices, and sending a probe packet along a detection path, which starts from the probe device, in the set of detection paths; controlling all network forwarding devices to add multiple information fields to the probe packet during a process of sending and/or forwarding the probe packet; when a respective probe packet received by each probe device and destined for the probe device itself is acquired, extracting multiple information fields in the probe packet, and calculating link delay information on a probe packet path based on the multiple information fields; and updating network-wide link delay information based on the link delay information of the each probe device. In the present solution, the minimum vertex cover algorithm is used to optimize the deployment position of measurement terminals in the network and reconstruct the set of detection paths in the network, thereby planning a network measurement scheme for in-band telemetry and enhancing the real-time performance and accuracy of the network delay measurement.

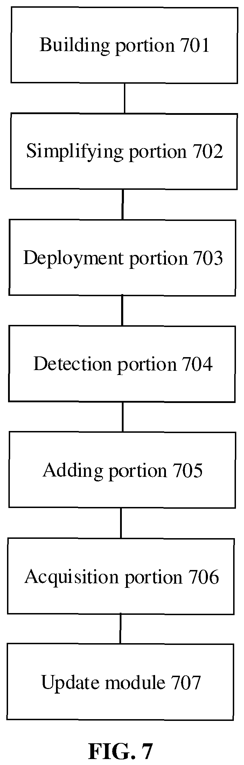

FIG. 7 is a structural diagram of a network delay in-band telemetry apparatus according to an embodiment of the present invention. As shown in FIG. 7, the apparatus includes a building portion 701, a simplifying portion 702, a deployment portion 703, a detection portion 704, an adding portion 705, an acquisition portion 706 and an update module 707.

The building portion 701 is configured to acquire network-wide topology information by means of a link layer discovery protocol, create a network-wide topology view, and build a mathematical model for a network-wide delay measurement problem based on the network-wide topology view. For a detailed description, reference is made to related descriptions corresponding to the foregoing method embodiments, and details are not described herein again.

The simplifying portion 702 is configured to simplify the mathematical model based on a minimum vertex cover algorithm, and estimate a minimum vertex cover set of the network-wide topology view based on the simplified mathematical model. For a detailed description, reference is made to related descriptions corresponding to the foregoing method embodiments, and details are not described herein again.

The deployment portion 703 is configured to construct a set of detection paths satisfying a preset condition based on the minimum vertex cover set, and deploy a set of probe devices based on the minimum vertex cover set. For a detailed description, reference is made to related descriptions corresponding to the foregoing method embodiments, and details are not described herein again.

The detection portion 704 is configured to mount a respective probe host on each probe device in the set of probe devices, and send a probe packet along a detection path, which starts from the probe device, in the set of detection paths. For a detailed description, reference is made to related descriptions corresponding to the foregoing method embodiments, and details are not described herein again.

The adding portion 705 is configured to control all network forwarding devices to add multiple information fields to the probe packet during a process of sending and/or forwarding the probe packet. For a detailed description, reference is made to related descriptions corresponding to the foregoing method embodiments, and details are not described herein again.

The acquisition portion 706 is configured to, when a respective probe packet received by each probe device and destined for the probe device itself is acquired, extract multiple information fields in the probe packet, and calculate link delay information on a probe packet path based on the multiple information fields. For a detailed description, reference is made to related descriptions corresponding to the foregoing method embodiments, and details are not described herein again.

The update portion 707 is configured to update network-wide link delay information based on the link delay information of the each probe device. For a detailed description, reference is made to related descriptions corresponding to the foregoing method embodiments, and details are not described herein again.

The network delay in-band telemetry apparatus provided in the embodiments of the present invention is configured to perform the network delay in-band telemetry method provided in the foregoing embodiments. The implementation manner and principle thereof are the same as those in the foregoing embodiments. For details, reference can be made to relevant descriptions of the foregoing method embodiments, and would not be described herein again.

In some embodiments, the building portion 701 is further configured to: model a network-wide topology as a network-wide topology view, network switch devices and terminals being vertices in the view, and network links being undirected edges in the view; based on the network-wide topology view, detect all paths by using an in-band network telemetry method, and acquire timeliness and overhead for detecting all of the paths; and build the mathematical model for the network-wide delay measurement problem based on all of the paths, and the timeliness and overhead for detecting all of the paths.

In some embodiments, the simplifying portion 702 is further configured to: calculate association degrees of edges incident to each vertex based on the network-wide topology view, and select edges incident to vertices with association degrees greater than a preset threshold for coverage based on the minimum vertex cover algorithm; and recalculate the association degrees of uncovered edges incident to each vertex, repeat the operation of selecting the edges incident to the vertices with the association degrees greater than the preset threshold for coverage based on the minimum vertex cover algorithm until all edges in the graph are covered, and obtaining the minimum vertex cover set of the network-wide topology view.

In some embodiments, the detection portion 704 is further configured to: send, by the probe host by means of source routing, the probe packet along the detection path, which starts from the probe device, in the minimum vertex cover set; and acquire a respective probe packet destined for each probe device and forwarding same to a respective detection terminal suspended from each probe device.

In some embodiments, the acquisition portion 706 is further configured to: take a difference between an arrival time of a probe packet marked at a first probe device of a certain hop and an arrival time of a probe packet marked at a second probe device of a previous hop as a link delay between the first probe device and the second probe device; and take a difference between the arrival time of the probe packet marked at the first probe device of the certain hop and a sending time of the probe packet marked at the second probe device of the previous hop as a propagation delay of a link between the first probe device and the second probe device.

In some embodiments, the update portion 707 is further configured to: regularly acquire link delay information reported by each probe device, and update the network-wide link delay information based on the reported link delay information.

In some embodiments, the acquisition portion 706 is further configured to: add the multiple information fields to the probe packet by means of a programmable switch. The multiple information fields at least include a packet arrival time, a receiving port, a packet sending time, a sending port, and an own device number.

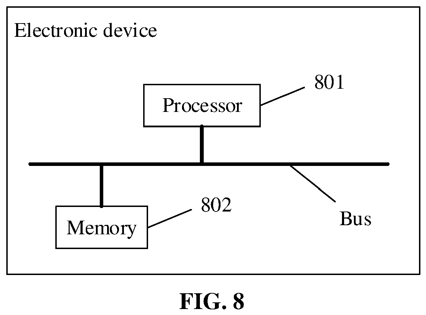

FIG. 8 shows an electronic device according to an embodiment not being part of the invention. As shown in FIG. 8, the electronic device includes a processor 801 and a memory 802. The processor 801 and the memory 802 may be connected by means of a bus or in another manner. In FIG. 8, the connection by means of a bus is used as an example.

The processor 801 may be a Central Processing Unit (CPU). The processor 801 may also be another general-purpose processor, a Digital Signal Processor (DSP), an Application-Specific Integrated Circuit (ASIC), a Field-Programmable Gate Array (FPGA) or another programmable logic device, a discrete gate or transistor logic device, a discrete hardware component or another chip, or a combination of the above types of chips.

The memory 802 is a non-transitory computer-readable storage medium, which may be used to store a non-transitory software program, a non-transitory computer-executable program and module, such as program instructions/modules corresponding to the methods provided in the embodiments of the present invention. The processor 801 executes various functional applications of the processor and data processing by running the non-transitory software program, instructions and modules stored in the memory 802. That is, the processor 801 implements the methods in the above method embodiments.

The memory 802 may include a stored program area and a stored data area. The stored program area may store an operating system and an application program required for at least one function. The stored data area may store data created by the processor 801 and the like. In addition, the memory 802 may include a high-speed random access memory and may also include a non-transitory memory, such as at least one magnetic disk storage device, a flash memory device or other non-transitory solid-state memory devices. In some embodiments, the memory 802 may optionally include a memory arranged remotely from the processor 801, and such a remote memory may be connected to the processor 801 by means of a network. Examples of the above network may include, but are not limited to, the Internet, an intranet, a local area network, a mobile communication network and combinations thereof.

One or more modules are stored in the memory 802, and when executed by the processor 801, the modules perform the methods in the foregoing method embodiments.

The specific details of the above electronic device may be understood with reference to the corresponding related descriptions and effects in the foregoing method embodiments, and are not described herein again.

Those skilled in the art can understand that all or part of the processes in the methods of the foregoing embodiments may be completed by means of hardware related to instructions by using a computer program. The program may be stored in a computer-readable storage medium. When the program is executed, the processes of the foregoing method embodiments may be included in the program. The storage medium may be a magnetic disk, an optical disk, a read-only memory (ROM), a random access memory (RAM), a flash memory, a hard disk drive (HDD), a solid-state drive (SSD) or the like. The storage medium may also include a combination of the above types of memories.

### Industrial Applicability

The present invention provides a network delay in-band telemetry method and apparatus, an electronic device, and a storage medium. The method includes: acquiring network-wide topology information by means of a link layer discovery protocol, creating a network-wide topology view, and building, based on the network-wide topology view, a mathematical model for a network-wide delay measurement problem; simplifying the mathematical model based on a minimum vertex cover algorithm, and estimating a minimum vertex cover set of the network-wide topology view based on the simplified mathematical model; constructing, based on the minimum vertex cover set, a set of detection paths satisfying a preset condition, and deploying a set of probe devices based on the minimum vertex cover set; mounting a respective probe host on each probe device in the set of probe devices, and sending a probe packet along a detection path, which starts from the probe device, in the set of detection paths; controlling all network forwarding devices to add multiple information fields to the probe packet during a process of sending and/or forwarding the probe packet; when a respective probe packet received by each probe device and destined for the probe device itself is acquired, extracting multiple information fields in the probe packet, and calculating link delay information on a probe packet path based on the multiple information fields; and updating network-wide link delay information based on the link delay information of the each probe device. In the present invention, the minimum vertex cover algorithm is used to optimize the deployment position of measurement terminals in the network and reconstruct the set of detection paths in the network, thereby planning a network measurement scheme for in-band telemetry and enhancing the real-time performance and accuracy of the network delay measurement.

## Claims

1. A network delay in-band telemetry method, comprising:
acquiring (S11) network-wide topology information by means of a link layer discovery protocol, creating a network-wide topology view, and building, based on the network-wide topology view, a mathematical model for a network-wide delay measurement problem;
simplifying (S12) the mathematical model based on a minimum vertex cover algorithm, and estimating a minimum vertex cover set of the network-wide topology view based on the simplified mathematical model;
constructing (S13), based on the minimum vertex cover set, a set of detection paths satisfying a preset condition, and deploying a set of probe devices based on the minimum vertex cover set;
mounting (S14) a respective probe host on each probe device in the set of probe devices, and sending a probe packet along a detection path, which starts from the probe device, in the set of detection paths;
controlling (S15) all network forwarding devices to add a plurality of information fields to the probe packet during a process of sending and/or forwarding the probe packet;
when a respective probe packet received by each probe device and destined for the probe device itself is acquired, extracting (S16) a plurality of information fields in the probe packet, and calculating link delay information on a probe packet path based on the plurality of information fields; and
updating (S17) network-wide link delay information based on the link delay information of the each probe device,
**characterized in that** the acquiring network-wide topology information by means of a link layer discovery protocol, creating a network-wide topology view, and building, based on the network-wide topology view, a mathematical model for a network-wide delay measurement problem comprises:
modelling a network-wide topology as a network-wide topology view, network switch devices and terminals being vertices in the view, and network links being undirected edges in the view;
based on the network-wide topology view, detecting all paths by using an in-band network telemetry method, and acquiring timeliness and overhead for detecting all of the paths; and
building the mathematical model for the network-wide delay measurement problem based on all of the paths, and the timeliness and overhead for detecting all of the paths,
wherein the simplifying the mathematical model based on a minimum vertex cover algorithm, and estimating a minimum vertex cover set of the network-wide topology view based on the simplified mathematical model comprises:
calculating association degrees of edges incident to each vertex based on the network-wide topology view, and selecting, based on the minimum vertex cover algorithm, edges incident to vertices with association degrees greater than a preset threshold for coverage; and
recalculating the association degrees of uncovered edges incident to each vertex, repeating the operation of the selecting, based on the minimum vertex cover algorithm, edges incident to vertices with association degrees greater than a preset threshold for coverage until all edges in the graph are covered, and obtaining the minimum vertex cover set of the network-wide topology view.

2. The method according to claim 1, wherein the mounting a respective probe host on each probe device in the set of probe devices, and sending a probe packet along a detection path, which starts from the probe device, in the set of detection paths comprises:
sending, by the probe host by means of source routing, the probe packet along the detection path, which starts from the probe device, in the minimum vertex cover set; and
acquiring a respective probe packet destined for each probe device and forwarding same to a detection terminal suspended from the probe device.

3. The method according to claim 2, wherein the when a respective probe packet received by each probe device and destined for the probe device itself is acquired, extracting a plurality of information fields in the probe packet, and calculating link delay information on a probe packet path based on the plurality of information fields comprises:
taking a difference between an arrival time of a probe packet marked at a first probe device of a certain hop and an arrival time of a probe packet marked at a second probe device of a previous hop as a link delay between the first probe device and the second probe device; and
taking a difference between the arrival time of the probe packet marked at the first probe device of the certain hop and a sending time of the probe packet marked at the second probe device of the previous hop as a propagation delay of a link between the first probe device and the second probe device.

4. The method according to claim 3, wherein the updating network-wide link delay information based on the link delay information of the each probe device comprises:
regularly acquiring link delay information reported by each probe device, and updating the network-wide link delay information based on the reported link delay information.

5. The method according to claim 3, further comprising:
adding the plurality of information fields to the probe packet by means of a programmable switch, wherein the plurality of information fields at least comprise a packet arrival time, a receiving port, a packet sending time, a sending port, and an own device number.

6. A network delay in-band telemetry apparatus, comprising:
a building portion (701) configured to acquire network-wide topology information by means of a link layer discovery protocol, create a network-wide topology view, and build a mathematical model for a network-wide delay measurement problem based on the network-wide topology view;
a simplifying portion (702) configured to simplify the mathematical model based on a minimum vertex cover algorithm, and estimate a minimum vertex cover set of the network-wide topology view based on the simplified mathematical model;
a deployment portion (703) configured to construct a set of detection paths satisfying a preset condition based on the minimum vertex cover set, and deploy a set of probe devices based on the minimum vertex cover set;
a detection portion (704) configured to mount a respective probe host on each probe device in the set of probe devices, and send a probe packet along a detection path, which starts from the probe device, in the set of detection paths;
an adding portion (705) configured to control all network forwarding devices to add a plurality of information fields to the probe packet during a process of sending and/or forwarding the probe packet;
an acquisition portion (706) configured to, when a respective probe packet received by each probe device and destined for the probe device itself is acquired, extract a plurality of information fields in the probe packet, and calculate link delay information on a probe packet path based on the plurality of information fields; and
an update portion (707) configured to update network-wide link delay information based on the link delay information of the each probe device,
**characterized in that** the building portion is further configured to: model a network-wide topology as a network-wide topology view, network switch devices and terminals being vertices in the view, and network links being undirected edges in the view;
based on the network-wide topology view, detect all paths by using an in-band network telemetry method, and acquire timeliness and overhead for detecting all of the paths; and
build the mathematical model for the network-wide delay measurement problem based on all of the paths, and the timeliness and overhead for detecting all of the paths,
wherein the simplifying portion is further configured to: calculate association degrees of edges incident to each vertex based on the network-wide topology view, and select edges incident to vertices with association degrees greater than a preset threshold for coverage based on the minimum vertex cover algorithm; and
recalculate the association degrees of uncovered edges incident to each vertex, repeat the operation of selecting the edges incident to the vertices with the association degrees greater than the preset threshold for coverage based on the minimum vertex cover algorithm until all edges in the graph are covered, and obtaining the minimum vertex cover set of the network-wide topology view.

7. The apparatus according to claim 6, wherein the detection portion is further configured to: send, by the probe host by means of source routing, the probe packet along the detection path, which starts from the probe device, in the minimum vertex cover set; and
acquire a respective probe packet destined for each probe device and forwarding same to a detection terminal suspended from the probe device.

8. The apparatus according to claim 7, wherein the acquisition portion is further configured to: take a difference between an arrival time of a probe packet marked at a first probe device of a certain hop and an arrival time of a probe packet marked at a second probe device of a previous hop as a link delay between the first probe device and the second probe device; and
take a difference between the arrival time of the probe packet marked at the first probe device of the certain hop and a sending time of the probe packet marked at the second probe device of the previous hop as a propagation delay of a link between the first probe device and the second probe device.

9. The apparatus according to claim 8, wherein the update portion is further configured to: regularly acquire link delay information reported by each probe device, and update the network-wide link delay information based on the reported link delay information.

10. The apparatus according to claim 8, wherein the acquisition portion is further configured to: add the plurality of information fields to the probe packet by means of a programmable switch, wherein the plurality of information fields at least comprise a packet arrival time, a receiving port, a packet sending time, a sending port, and an own device number.

## Patentansprüche

1. Netzwerkverzögerungs-In-Band-Telemetrieverfahren, umfassend:
Erfassen (S11) netzwerkweiter Topologieinformationen mittels eines Verbindungsschicht-Discovery-Protokolls, Erstellen einer netzwerkweiten Topologieansicht und Aufbauen, basierend auf der netzwerkweiten Topologieansicht, eines mathematischen Modells für ein netzwerkweites Verzögerungsmessproblem;
Vereinfachen (S12) des mathematischen Modells basierend auf einem Mindestknotenabdeckungsalgorithmus und Schätzen eines Mindestknotenabdeckungssatzes der netzwerkweiten Topologieansicht basierend auf dem vereinfachten mathematischen Modell;
Konstruieren (S13), basierend auf dem Mindestknotenabdeckungssatz, eines Satzes von Detektionspfaden, die eine voreingestellte Bedingung erfüllen, und Anwenden eines Satzes von Prüfvorrichtungen basierend auf dem Mindestknotenabdeckungssatz;
Anbringen (S14) eines jeweiligen Prüf-Hosts an jeder Prüfvorrichtung in dem Satz von Prüfvorrichtungen und Senden eines Prüfpakets entlang eines Detektionspfades, der von der Prüfvorrichtung ausgeht, in dem Satz von Detektionspfaden;
Steuern (S15) aller Netzwerkweiterleitungsvorrichtungen, um dem Prüfpaket während eines Prozesses des Sendens und/oder Weiterleitens des Prüfpakets eine Vielzahl von Informationsfeldern hinzuzufügen;
wenn ein jeweiliges Prüfpaket, das durch jede Prüfvorrichtung empfangen wird und für die Prüfvorrichtung selbst bestimmt ist, erfasst wird, Extrahieren (S16) einer Vielzahl von Informationsfeldern in dem Prüfpaket, und Berechnen von Verbindungsverzögerungsinformationen auf einem Prüfpaketpfad basierend auf der Vielzahl von Informationsfeldern; und
Aktualisieren (S17) netzwerkweiter Verbindungsverzögerungsinformationen basierend auf den Verbindungsverzögerungsinformationen jeder Prüfvorrichtung,
**dadurch gekennzeichnet, dass** das Erfassen netzwerkweiter Topologieinformationen mittels eines Verbindungsschicht-Discovery-Protokolls, das Erstellen einer netzwerkweiten Topologieansicht und das Aufbauen eines mathematischen Modells für ein netzwerkweites Verzögerungsmessproblem basierend auf der netzwerkweiten Topologieansicht umfasst:
Modellieren einer netzwerkweiten Topologie als eine netzwerkweite Topologieansicht, wobei Netzwerk-Switch-Vorrichtungen und Endgeräte in der Ansicht Knoten sind und Netzwerkverbindungen in der Ansicht ungerichtete Kanten sind;
basierend auf der netzwerkweiten Topologieansicht, Detektieren aller Pfade unter Verwendung eines In-Band-Netzwerktelemetrieverfahrens, und Erfassen von Aktualität und Overhead zum Detektieren aller Pfade; und
Aufbauen des mathematischen Modells für das netzwerkweite Verzögerungsmessproblem basierend auf allen Pfaden sowie der Aktualität und dem Overhead zum Detektieren aller Pfade,
wobei das Vereinfachen des mathematischen Modells basierend auf einem Mindestknotenabdeckungsalgorithmus und das Schätzen eines Mindestknotenabdeckungssatzes der netzwerkweiten Topologieansicht basierend auf dem vereinfachten mathematischen Modell umfasst:
Berechnen von Assoziationsgraden von an jeden Knoten angrenzenden Kanten basierend auf der netzwerkweiten Topologieansicht, und Auswählen, basierend auf dem Mindestknotenabdeckungsalgorithmus, von an Knoten angrenzenden Kanten mit Assoziationsgraden, die größer als ein voreingestellter Schwellenwert zur Abdeckung sind; und
Neuberechnen der Assoziationsgrade nicht abgedeckter Kanten, die an jeden Knoten angrenzen, Wiederholen des Vorgangs des Auswählens, basierend auf dem Mindestknotenabdeckungsalgorithmus, von Kanten, die an Knoten angrenzen, deren Assoziationsgrade größer als ein voreingestellter Schwellenwert für die Abdeckung sind, bis alle Kanten in dem Graphen abgedeckt sind, und Erhalten des Mindestknotenabdeckungssatzes der netzwerkweiten Topologieansicht.

2. Verfahren nach Anspruch 1, wobei das Anbringen eines jeweiligen Prüf-Hosts an jeder Prüfvorrichtung in dem Satz von Prüfvorrichtungen und das Senden eines Prüfpakets entlang eines Detektionspfades, der von der Prüfvorrichtung ausgeht, in dem Satz von Detektionspfaden umfasst:
Senden, durch den Prüf-Host mittels Quellrouting, des Prüfpakets entlang des Detektionspfades, der von der Prüfvorrichtung ausgeht, in dem Mindestknotenabdeckungssatz; und
Erfassen eines jeweiligen Prüfpakets, das für jede Prüfvorrichtung bestimmt ist, und Weiterleiten desselben an ein Detektionsendgerät, das an der Prüfvorrichtung aufgehängt ist.

3. Verfahren nach Anspruch 2, wobei das Extrahieren einer Vielzahl von Informationsfeldern in dem Prüfpaket, wenn ein jeweiliges Prüfpaket, das von jeder Prüfvorrichtung empfangen wird und für die Prüfvorrichtung selbst bestimmt ist, erfasst wird, und das Berechnen von Verbindungsverzögerungsinformationen auf einem Prüfpaketpfad basierend auf der Vielzahl von Informationsfeldern umfasst:
Verwenden einer Differenz zwischen einer Ankunftszeit eines an einer ersten Prüfvorrichtung eines bestimmten Hops markierten Prüfpakets und einer Ankunftszeit eines an einer zweiten Prüfvorrichtung eines vorherigen Hops markierten Prüfpakets als eine Verbindungsverzögerung zwischen der ersten Prüfvorrichtung und der zweiten Prüfvorrichtung; und
Verwenden einer Differenz zwischen der an der ersten Prüfvorrichtung des bestimmten Hops markierten Ankunftszeit des Prüfpakets und einer an der zweiten Prüfvorrichtung des vorherigen Hops markierten Sendezeit des Prüfpakets als eine Ausbreitungsverzögerung einer Verbindung zwischen der ersten Prüfvorrichtung und der zweiten Prüfvorrichtung.

4. Verfahren nach Anspruch 3, wobei das Aktualisieren netzwerkweiter Verbindungsverzögerungsinformationen basierend auf den Verbindungsverzögerungsinformationen jeder Prüfvorrichtung umfasst:
regelmäßiges Erfassen von durch jede Prüfvorrichtung gemeldeten Verbindungsverzögerungsinformationen und Aktualisieren der netzwerkweiten Verbindungsverzögerungsinformationen basierend auf den gemeldeten Verbindungsverzögerungsinformationen.

5. Verfahren nach Anspruch 3, ferner umfassend:
Hinzufügen der Vielzahl von Informationsfeldern zu dem Prüfpaket mittels eines programmierbaren Switches, wobei die Vielzahl von Informationsfeldern mindestens eine Paketankunftszeit, einen Empfangsanschluss, eine Paketsendezeit, einen Sendeanschluss und eine eigene Vorrichtungsnummer umfassen.

6. Netzwerkverzögerungs-In-Band-Telemetrieeinrichtung, umfassend:
einen Aufbauabschnitt (701), der konfiguriert ist, um netzwerkweite Topologieinformationen mittels eines Verbindungsschicht-Discovery-Protokolls zu erfassen, eine netzwerkweite Topologieansicht zu erstellen und ein mathematisches Modell für ein netzwerkweites Verzögerungsmessproblem basierend auf der netzwerkweiten Topologieansicht aufzubauen;
einen Vereinfachungsabschnitt (702), der konfiguriert ist, um das mathematische Modell basierend auf einem Mindestknotenabdeckungsalgorithmus zu vereinfachen und einen Mindestknotenabdeckungssatz der netzwerkweiten Topologieansicht basierend auf dem vereinfachten mathematischen Modell zu schätzen;
einen Anwendungsabschnitt (703), der konfiguriert ist, um einen Satz von Detektionspfaden, die eine voreingestellte Bedingung erfüllen, basierend auf dem Mindestknotenabdeckungssatz zu konstruieren und einen Satz von Prüfvorrichtungen basierend auf dem Mindestknotenabdeckungssatz anzuwenden;
einen Detektionsabschnitt (704), der konfiguriert ist, um einen jeweiligen Prüf-Host auf jeder Prüfvorrichtung in dem Satz von Prüfvorrichtungen anzubringen und ein Prüfpaket entlang eines Detektionspfades, der von der Prüfvorrichtung ausgeht, in dem Satz von Detektionspfaden zu senden;
einen Hinzufügeabschnitt (705), der konfiguriert ist, um alle Netzwerkweiterleitungsvorrichtungen zu steuern, um dem Prüfpaket während eines Prozesses des Sendens und/oder Weiterleitens des Prüfpakets eine Vielzahl von Informationsfeldern hinzuzufügen;
einen Erfassungsabschnitt (706), der konfiguriert ist, um, wenn ein jeweiliges Prüfpaket, das von jeder Prüfvorrichtung empfangen wird und für die Prüfvorrichtung selbst bestimmt ist, erfasst wird, eine Vielzahl von Informationsfeldern in dem Prüfpaket zu extrahieren und Verbindungsverzögerungsinformationen auf einem Prüfpaketpfad basierend auf der Vielzahl von Informationsfeldern zu berechnen; und
einen Aktualisierungsabschnitt (707), der konfiguriert ist, um netzwerkweite Verbindungsverzögerungsinformationen basierend auf den Verbindungsverzögerungsinformationen jeder Prüfvorrichtung zu aktualisieren,
**dadurch gekennzeichnet, dass** der Aufbauabschnitt ferner konfiguriert ist, um: eine netzwerkweite Topologie als eine netzwerkweite Topologieansicht zu modellieren, wobei Netzwerk-Switch-Vorrichtungen und Endgeräte in der Ansicht Knoten sind und Netzwerkverbindungen in der Ansicht ungerichtete Kanten sind;
basierend auf der netzwerkweiten Topologieansicht, Detektieren aller Pfade unter Verwendung eines In-Band-Netzwerktelemetrieverfahrens und Erfassen von Aktualität und Overhead zum Detektieren aller Pfade; und
Aufbauen des mathematischen Modells für das netzwerkweite Verzögerungsmessproblem basierend auf allen Pfaden sowie der Aktualität und dem Overhead zum Detektieren aller Pfade,
wobei der Vereinfachungsabschnitt ferner konfiguriert ist, um: Assoziationsgrade von Kanten, die an jedem Knoten angrenzen, basierend auf der netzwerkweiten Topologieansicht zu berechnen, und Kanten, die an Knoten angrenzen, deren Assoziationsgrade größer als ein voreingestellter Schwellenwert sind, für eine Abdeckung basierend auf dem Mindestknotenabdeckungsalgorithmus auszuwählen; und
Neuberechnen der Assoziationsgrade von nicht abgedeckten Kanten, die an jeden Knoten angrenzen, Wiederholen des Vorgangs des Auswählens der Kanten, die an den Knoten angrenzen, deren Assoziationsgrade größer als der voreingestellte Schwellenwert sind, zur Abdeckung basierend auf dem Mindestknotenabdeckungsalgorithmus, bis alle Kanten in dem Graphen abgedeckt sind, und Erhalten des Mindestknotenabdeckungssatzes der netzwerkweiten Topologieansicht.

7. Einrichtung nach Anspruch 6, wobei der Detektionsabschnitt ferner konfiguriert ist, um: durch den Prüf-Host mittels Quellrouting das Prüfpakets entlang des Detektionspfades, der von der Prüfvorrichtung ausgeht, in dem Mindestknotenabdeckungssatz zu senden; und
Erfassen eines jeweiligen Prüfpakets, das für jede Prüfvorrichtung bestimmt ist, und Weiterleiten desselben an ein Detektionsendgerät, das an der Prüfvorrichtung aufgehängt ist.

8. Einrichtung nach Anspruch 7, wobei der Erfassungsabschnitt ferner konfiguriert ist, um: eine Differenz zwischen einer Ankunftszeit eines an einer ersten Prüfvorrichtung eines bestimmten Hops markierten Prüfpakets und einer Ankunftszeit eines an einer zweiten Prüfvorrichtung eines vorherigen Hops markierten Prüfpakets als eine Verbindungsverzögerung zwischen der ersten Prüfvorrichtung und der zweiten Prüfvorrichtung zu verwenden; und
Verwenden einer Differenz zwischen der an der ersten Prüfvorrichtung des bestimmten Hops markierten Ankunftszeit des Prüfpakets und einer an der zweiten Prüfvorrichtung des vorherigen Hops markierten Sendezeit des Prüfpakets als eine Ausbreitungsverzögerung einer Verbindung zwischen der ersten Prüfvorrichtung und der zweiten Prüfvorrichtung.

9. Einrichtung nach Anspruch 8, wobei der Aktualisierungsabschnitt ferner konfiguriert ist, um: regelmäßig Verbindungsverzögerungsinformationen zu erfassen, die von jeder Prüfvorrichtung gemeldet werden, und die netzwerkweiten Verbindungsverzögerungsinformationen basierend auf den gemeldeten Verbindungsverzögerungsinformationen zu aktualisieren.

10. Einrichtung nach Anspruch 8, wobei der Erfassungsabschnitt ferner konfiguriert ist zum: Hinzufügen der Vielzahl von Informationsfeldern zu dem Prüfpaket mittels eines programmierbaren Schalters, wobei die Vielzahl von Informationsfeldern mindestens eine Paketankunftszeit, einen Empfangsanschluss, eine Paketsendezeit, einen Sendeanschluss und eine eigene Vorrichtungsnummer umfassen.

## Revendications

1. Procédé de télémétrie intrabande de retard de réseau, comprenant :
l'acquisition (S11) d'informations de topologie à l'échelle du réseau au moyen d'un protocole de découverte de couche de liaison, la création d'une vue de topologie à l'échelle du réseau et le développement, sur la base de la vue de topologie à l'échelle du réseau, d'un modèle mathématique pour un problème de mesure de retard à l'échelle du réseau ;
la simplification (S12) du modèle mathématique sur la base d'un algorithme de couverture de sommet minimal, et l'estimation d'un ensemble de couverture de sommet minimal de la vue de topologie à l'échelle du réseau sur la base du modèle mathématique simplifié ;
la construction (S13), sur la base de l'ensemble de couverture de sommet minimal, d'un ensemble de chemins de détection satisfaisant une condition prédéfinie, et le déploiement d'un ensemble de dispositifs de sonde sur la base de l'ensemble de couverture de sommet minimal ;
le montage (S14) d'un hôte de sonde respectif sur chaque dispositif de sonde dans l'ensemble de dispositifs de sonde, et l'envoi d'un paquet de sonde le long d'un chemin de détection, qui part du dispositif de sonde, dans l'ensemble de chemins de détection ;
la commande (S15) de tous les dispositifs de transfert de réseau pour ajouter une pluralité de champs d'informations au paquet de sonde pendant un processus d'envoi et/ou de transfert du paquet de sonde ;
lorsqu'un paquet de sonde respectif reçu par chaque dispositif de sonde et destiné au dispositif de sonde lui-même est acquis, l'extraction (S16) d'une pluralité de champs d'information dans le paquet de sonde, et le calcul d'informations de retard de liaison sur un chemin de paquet de sonde sur la base de la pluralité de champs d'informations ; et
la mise à jour (S17) des informations de retard de liaison à l'échelle du réseau sur la base des informations de retard de liaison de chaque dispositif de sonde,
**caractérisé en ce que** l'acquisition d'informations de topologie à l'échelle du réseau au moyen d'un protocole de découverte de couche de liaison, la création d'une vue de topologie à l'échelle du réseau et le développement, sur la base de la vue de topologie à l'échelle du réseau, d'un modèle mathématique pour un problème de mesure de retard à l'échelle du réseau comprennent :
la modélisation d'une topologie à l'échelle du réseau comme vue de topologie à l'échelle du réseau, les dispositifs et terminaux de commutation de réseau étant des sommets dans la vue, et les liaisons de réseau étant des arêtes non dirigées dans la vue ;
sur la base de la vue de topologie à l'échelle du réseau, la détection de tous les chemins à l'aide d'un procédé de télémétrie de réseau intrabande, et l'acquisition d'une actualité et d'une surcharge pour détecter tous les chemins ; et
le développement du modèle mathématique pour le problème de mesure de retard à l'échelle du réseau sur la base de tous les chemins, et de l'actualité et de la surcharge pour détecter tous les chemins,
dans lequel la simplification du modèle mathématique sur la base d'un algorithme de couverture de sommet minimal, et l'estimation d'un ensemble de couverture de sommet minimal de la vue de topologie à l'échelle du réseau sur la base du modèle mathématique simplifié comprennent :
le calcul de degrés d'association de arêtes incidentes pour chaque sommet sur la base de la vue de topologie à l'échelle du réseau, et la sélection, sur la base de l'algorithme de couverture de sommet minimal, d'arêtes incidentes aux sommets avec des degrés d'association supérieurs à un seuil de couverture prédéfini ; et
le nouveau calcul des degrés d'association de arêtes découvertes incidentes à chaque sommet, la répétition de l'opération de sélection, basée sur l'algorithme de couverture de sommet minimal, d'arêtes incidentes aux sommets avec des degrés d'association supérieurs à un seuil prédéfini de couverture jusqu'à ce que toutes les arêtes du graphe soient couvertes, et l'obtention de l'ensemble de couverture de sommet minimal de la vue de topologie à l'échelle du réseau.

2. Procédé selon la revendication 1, dans lequel le montage d'un hôte de sonde respectif sur chaque dispositif de sonde dans l'ensemble de dispositifs de sonde, et l'envoi d'un paquet de sonde le long d'un chemin de détection, qui commence à partir du dispositif de sonde, dans l'ensemble de chemins de détection comprend :
l'envoi, par l'hôte de sonde au moyen d'un routage de source, du paquet de sonde le long du chemin de détection, qui part du dispositif de sonde, dans l'ensemble de couverture de sommet minimal ; et
l'acquisition d'un paquet de sonde respectif destiné à chaque dispositif de sonde et son transfert à un terminal de détection suspendu du dispositif de sonde.

3. Procédé selon la revendication 2, dans lequel le moment où un paquet de sonde respectif reçu par chaque dispositif de sonde et destiné au dispositif de sonde lui-même est acquis, l'extraction d'une pluralité de champs d'informations dans le paquet de sonde, et le calcul d'informations de retard de liaison sur un chemin de paquet de sonde sur la base de la pluralité de champs d'informations comprend :
la prise en compte d'une différence entre un temps d'arrivée d'un paquet de sonde marqué au niveau d'un premier dispositif de sonde d'un certain saut et d'un temps d'arrivée d'un paquet de sonde marqué au niveau d'un second dispositif de sonde d'un saut précédent comme retard de liaison entre le premier dispositif de sonde et le second dispositif de sonde ; et
la prise en compte d'une différence entre le temps d'arrivée du paquet de sonde marqué au niveau du premier dispositif de sonde du certain saut et un temps d'envoi du paquet de sonde marqué au niveau du second dispositif de sonde du saut précédent comme retard de propagation d'une liaison entre le premier dispositif de sonde et le second dispositif de sonde.

4. Procédé selon la revendication 3, dans lequel la mise à jour des informations de retard de liaison à l'échelle du réseau sur la base des informations de retard de liaison de chaque dispositif de sonde comprend :
l'acquisition régulière d'informations de retard de liaison rapportées par chaque dispositif de sonde, et la mise à jour des informations de retard de liaison à l'échelle du réseau sur la base des informations de retard de liaison signalées.

5. Procédé selon la revendication 3, comprenant en outre :
l'ajout de la pluralité de champs d'informations au paquet de sonde au moyen d'un commutateur programmable, dans lequel la pluralité de champs d'informations comprend au moins un temps d'arrivée de paquet, un port de réception, un temps d'envoi de paquet, un port d'envoi, et un numéro de dispositif propre.

6. Appareil de télémétrie intrabande de retard de réseau, comprenant :
une partie de construction (701) configurée pour acquérir des informations de topologie à l'échelle du réseau au moyen d'un protocole de découverte de couche de liaison, créer une vue de topologie à l'échelle du réseau et développer un modèle mathématique pour un problème de mesure de retard à l'échelle du réseau sur la base de la vue de topologie à l'échelle du réseau ;
une partie de simplification (702) configurée pour simplifier le modèle mathématique sur la base d'un algorithme de couverture de sommets minimale, et estimer un ensemble de couverture de sommet minimal de la vue de topologie à l'échelle du réseau sur la base du modèle mathématique simplifié ;
une partie de déploiement (703) configurée pour construire un ensemble de chemins de détection satisfaisant une condition prédéfinie sur la base de l'ensemble de couverture de sommet minimal, et déployer un ensemble de dispositifs de sonde sur la base de l'ensemble de couverture de sommet minimal ;
une partie de détection (704) configurée pour monter un hôte de sonde respectif sur chaque dispositif de sonde dans l'ensemble de dispositifs de sonde, et envoyer un paquet de sonde le long d'un chemin de détection, qui part du dispositif de sonde, dans l'ensemble de chemins de détection ;
une partie d'ajout (705) configurée pour commander tous les dispositifs de transfert de réseau afin d'ajouter une pluralité de champs d'informations au paquet de sonde pendant un processus d'envoi et/ou de transfert du paquet de sonde ;
une partie d'acquisition (706) configurée pour, lorsqu'un paquet de sonde respectif reçu par chaque dispositif de sonde et destiné au dispositif de sonde lui-même est acquis, extraire une pluralité de champs d'informations dans le paquet de sonde, et calculer des informations de retard de liaison sur un chemin de paquet de sonde sur la base de la pluralité de champs d'informations ; et
une partie de mise à jour (707) configurée pour mettre à jour les informations de retard de liaison à l'échelle du réseau sur la base des informations de retard de liaison de chaque dispositif de sonde,
**caractérisé en ce que** la partie de développement est en outre configurée pour : modéliser une topologie à l'échelle du réseau comme vue de topologie à l'échelle du réseau, les dispositifs et terminaux de commutation de réseau étant sommets dans la vue, et les liaisons de réseau étant des arêtes non dirigées dans la vue ;
sur la base de la vue topologique à l'échelle du réseau, détecter tous les chemins à l'aide d'un procédé de télémétrie de réseau intrabande, et acquérir l'actualité et la surcharge pour détecter tous les chemins ; et
développer le modèle mathématique pour le problème de mesure de retard à l'échelle du réseau sur la base de tous les chemins, et de l'actualité et de la surcharge pour détecter tous les chemins,
dans lequel la partie de simplification est en outre configurée pour : calculer des degrés d'association de arêtes incidentes par rapport à chaque sommet sur la base de la vue topologique à l'échelle du réseau, et sélectionner des arêtes incidentes par rapport à sommets avec des degrés d'association supérieurs à un seuil prédéfini de couverture sur la base de l'algorithme de couverture de sommet minimal ; et
calculer à nouveau les degrés d'association des arêtes non couvertes incidentes sur chaque sommet, répéter l'opération de sélection des arêtes incidentes sur la sommets avec les degrés d'association supérieurs au seuil prédéfini de couverture sur la base de l'algorithme de couverture de sommet minimale jusqu'à ce que toutes les arêtes du graphe soient couvertes, et obtenir l'ensemble de couverture de sommet minimale de la vue topologique à l'échelle du réseau.

7. Appareil selon la revendication 6, dans lequel la partie de détection est en outre configurée pour : envoyer, par l'hôte de sonde au moyen d'un routage de source, le paquet de sonde le long du chemin de détection, qui part du dispositif de sonde, dans l'ensemble de couverture de sommet minimal ; et
acquérir un paquet de sonde respectif destiné à chaque dispositif de sonde et le transmettre à un terminal de détection suspendu du dispositif de sonde.

8. Appareil selon la revendication 7, dans lequel la partie d'acquisition est en outre configurée pour : prendre en compte une différence entre un temps d'arrivée d'un paquet de sonde marqué au niveau d'un premier dispositif de sonde d'un certain saut et un temps d'arrivée d'un paquet de sonde marqué au niveau d'un second dispositif de sonde d'un saut précédent comme retard de liaison entre le premier dispositif de sonde et le second dispositif de sonde ; et
prendre en compte une différence entre le temps d'arrivée du paquet de sonde marqué au niveau du premier dispositif de sonde du certain saut et un temps d'envoi du paquet de sonde marqué au niveau du second dispositif de sonde du saut précédent comme retard de propagation d'une liaison entre le premier dispositif de sonde et le second dispositif de sonde.

9. Appareil selon la revendication 8, dans lequel la partie de mise à jour est en outre configurée pour : acquérir régulièrement des informations de retard de liaison rapportées par chaque dispositif de sonde, et mettre à jour les informations de retard de liaison à l'échelle du réseau sur la base des informations de retard de liaison renvoyées.

10. Appareil selon la revendication 8, dans lequel la partie d'acquisition est en outre configurée pour : ajouter la pluralité de champs d'informations au paquet de sonde au moyen d'un commutateur programmable, dans lequel la pluralité de champs d'informations comprend au moins un temps d'arrivée du paquet, un port de réception, un temps d'envoi de paquet, un port d'envoi, et un numéro de dispositif propre.
